# EUROPEAN PATENT APPLICATION

(11) **EP 4 064 280 A1**
(43) Date of publication of application: **28.09.2022**
(21) Application number: 20889160.6
(22) Date of filing: 17.11.2020
(51) Int. Cl.: G10L 15/26, G10L 15/02

(54) **INTERACTION METHOD AND ELECTRONIC DEVICE**

(30) Priority: 20.11.2019 CN 201911140650
(71) Applicant: Vivo Mobile Communication Co., Ltd., Dongguan, Guangdong 523863 (CN)
(72) Inventor: XU, Lubo, Dongguan, Guangdong 523863 (CN); HU, Yujin, Dongguan, Guangdong 523863 (CN)
(74) Representative: Raffay & Fleck
(86) International application number: PCT/CN2020/129320
(87) International publication number: WO 2021/098675

(57) **Abstract**

Provided are an interaction method and an electronic device. The method comprises: receiving a target session message input by a user; converting the target session message into a first phoneme sequence; performing, according to a first phoneme conversion rule corresponding to a first conference group, phoneme coding on the first phoneme sequence to obtain a second phoneme sequence; and sending the second phoneme sequence to a first receiving end of the first conference group, wherein the target session message is a speech message or a text message.

## Description

### CROSS-REFERENCE TO RELATED APPLICATIONS

This application claims priority to Chinese Patent Application No. 201911140650.5 filed in China on November 20, 2019, which is incorporated herein by reference in its entirety.

### TECHNICAL FIELD

The present invention relates to the technical field of communications, and in particular, to an interaction method and an electronic device.

### BACKGROUND

At present, in the remote video conference system, people from different places can attend a conference at the same time, and all participating parties can see the display screen of the main venue. At present, the remote video conference usually sends audios, videos and electronic documents directly to the participating parties. In this way, only one remote video conference can be participated at a time. Therefore, in the prior art, when the remote video conference is participated through the electronic device, there is a problem that the number of participating parties is limited.

### SUMMARY

Embodiments of the present invention provide an interaction method and an electronic device, so as to solve the problem that the number of participating parties is limited when the video conference is participated through the electronic device.

According to a first aspect, the embodiments of the present invention provide an interaction method, applied to a first sending terminal of a teleconference. The method includes:
receiving a target conversation message input by a user;
converting the target conversation message into a first phoneme sequence;
performing phoneme coding on the first phoneme sequence according to a first phoneme conversion rule corresponding to a first conference group to obtain a second phoneme sequence; and
sending the second phoneme sequence to a first receiving terminal of the first conference group,
wherein the target conversion message is a voice message or a text message.

According to a second aspect, the embodiments of the present invention further provide an interaction method, applied to a first receiving terminal of a teleconference. The method includes:
receiving a second phoneme sequence sent by a first sending terminal, wherein the first sending terminal is a device in a first conference group;
decoding the second phoneme sequence according to a first phoneme conversion rule corresponding to the first conference group to obtain a first phoneme sequence; and
displaying a text content corresponding to the first phoneme sequence, or playing second audio data synthesized by the first phoneme sequence.

According to a third aspect, the embodiments of the present invention further provide an electronic device, applied to a first sending terminal of a teleconference. The electronic device includes:
a first receiving module, configured to receive a target conversation message input by a user;
a conversion module, configured to convert the target conversation message into a first phoneme sequence;
a coding module, configured to perform phoneme coding on the first phoneme sequence according to a first phoneme conversion rule corresponding to a first conference group to obtain a second phoneme sequence; and
a first sending module, configured to send the second phoneme sequence to a first receiving terminal of the first conference group,
wherein the target conversion message is a voice message or a text message.

According to a fourth aspect, the embodiments of the present invention further provide an electronic device, applied to a first receiving terminal of a teleconference. The electronic device includes:
a fifth receiving module, configured to receive a second phoneme sequence sent by a first sending terminal, wherein the first sending terminal is a device in a first conference group;
a second decoding module, configured to decode the second phoneme sequence according to a first phoneme conversion rule corresponding to the first conference group to obtain a first phoneme sequence; and
a second control module, configured to display a text content corresponding to the first phoneme sequence, or play second audio data synthesized by the first phoneme sequence.

According to a fifth aspect, the embodiments of the present invention further provide an electronic device, including a processor, a memory, and a computer program stored in the memory and capable of running on the processor, wherein when the computer program is executed by the processor, the steps of the above interaction method are implemented.

According to a sixth aspect, the embodiments of the present invention further provide a computer readable storage medium, storing a computer program, wherein when the computer program is executed by a processor, the steps of the above interaction method are implemented.

According to the embodiments of the present invention, the target conversation message input by a user is received; the target conversation message is converted into the first phoneme sequence; the first phoneme sequence is subjected to phoneme coding according to the first phoneme conversion rule corresponding to the first conference group to obtain the second phoneme sequence; and the second phoneme sequence is sent to the first receiving terminal of the first conversation group, so that the conversation message can be sent. Since the conversation message of the teleconference is transmitted through the phoneme sequence, so that limitation to the voice transmission form is avoided, and a user can attend a plurality of teleconferences at the same time. Meanwhile, the transmitted phoneme sequence is subjected to encryption coding by the phoneme conversion rule, so that the transmission safety of the conversation message is improved.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a first flowchart of an interaction method according to an embodiment of the present invention;
FIG. 2 is a first example diagram of a teleconference interface in an interaction method according to an embodiment of the present invention;
FIG. 3 is a second example diagram of a teleconference interface in an interaction method according to an embodiment of the present invention;
FIG. 4 is a third example diagram of a teleconference interface in an interaction method according to an embodiment of the present invention;
FIG. 5 is a fourth example diagram of a teleconference interface in an interaction method according to an embodiment of the present invention;
FIG. 6 is a second flowchart of an interaction method according to an embodiment of the present invention;
FIG. 7 is a first structural diagram of an electronic device according to an embodiment of the present invention;
FIG. 8 is a second structural diagram of an electronic device according to an embodiment of the present invention; and
FIG. 9 is a third structural diagram of an electronic device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

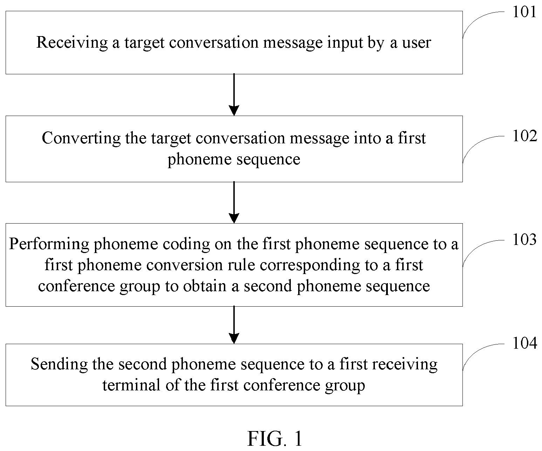

Referring to FIG. 1, FIG. 1 is a flowchart of an interaction method according to an embodiment of the present Invention. As shown in FIG. 1, the method includes the following steps:
Step 101: receiving a target conversation message input by a user.

The interaction method provided by the embodiments of the present invention is mainly applied to a teleconference and used for controlling transmission of a voice message. The interaction method of this embodiment is applied to a first sending terminal of a teleconference. Specifically, the party sending the target conversation message in the teleconference is a first sending terminal, and the first sending terminal may also receive the conversation messages sent by other parties participating in the teleconference.

The target conversation message is a voice message or a text message. Optionally, a user of the first sending terminal may input the target conversation message through voice under the state of convenient voice sending, and may input the target conversation message through a text under the state of inconvenient voice sending. The teleconference may be a video conference, or may also be a voice conference, which will not be further limited herein.

For example, in one embodiment, a voice input mode and a text input mode may be set for users to select. It should be understood that when participating in a plurality of teleconferences, a user - selects a certain teleconference as a voice input mode and other teleconferences as text input modes. All the teleconferences may also be set as the text input modes. In the embodiment of the present invention, the voice input mode refers to transmitting voice data acquired locally to other participating parties in the teleconference in real time.

In another embodiment, a voice input control may also be provided. When an operation control is pressed, voice input may be performed. In this way, one communication interface may be provided for each teleconference. Voice-converted text messages sent by other participating parties are displayed on the communication interface, and the voice input control and a text input control are displayed at the same time. A user may selectively perform text or voice input. It should be understood that one or a plurality of communication interfaces may be displayed at the same time. For example, when one communication interface is displayed, communication interfaces corresponding to different teleconferences may be switched and displayed through switching operation.

Step 102: converting the target conversation message into a first phoneme sequence.

In the embodiments of the present invention, the phoneme may include initial consonants of a Chinese syllable, simple or compound vowels of a Chinese syllable, and syllables read as a whole. When the target conversation message is a voice message, the target conversation message input by a user may be subjected to voice recognition based on a voice recognition technology to obtain a first phoneme sequence. When the target conversation message is a text message, the target conversation message may be subjected to phonetic notation by a phonetic notation tool so as to obtain a first phoneme sequence.

Step 103: performing phoneme coding on the first phoneme sequence according to a first phoneme conversion rule corresponding to a first conference group to obtain a second phoneme sequence.

In the embodiments of the present invention, the first phoneme conversion rule is an encryption rule or may be understood as a phoneme mapping rule, and each phoneme in the first phoneme sequence is converted into another mapping according to the first phoneme conversion rule. Optionally, the first phoneme sequence to the second phoneme sequence may be a one-to-one mapping relationship, or may also be a one-to-many mapping relationship, which is not further limited herein.

Optionally, phoneme conversion rules corresponding to different conference groups may be the same, or may also be different, which is not further limited herein. It should be understood that the phoneme conversion roles in the same conference group are the same, so that it can be ensured that each participating party can correctly perform phoneme decoding. In the embodiments of the present invention, the first phoneme sequence is subjected to encryption coding by the phoneme conversion rule, so that it can be ensured that only the participating parties can perform correct decoding and learn conference contents. Therefore, the message sending safety can be improved, and the conference content can be prevented from being intercepted by others. The conference group refers to all participating parties participating in the same teleconference.

It should be understood that there are totally 21 initial consonants: b, p, m, f, d, t, n, 1, g, k, h, j, q, x, zh, ch, sh, r, z, c, s.

There are 24 simple or compound vowels: a, o, e, i, u, v, ai, ei, ui, ao, ou, iu, ie, ve, er, an, en, in, un, vn, ang, eng, ing, ong. Each simple or compound vowel has four tones, so there are totally 96 simple or compound vowels.

There are 21 syllables read as a whole: zhi, chi, shi, ri, zi, ci, si, yuan, ya, yao, yan, yang, yuan, yo, yong, wa, wai, wan, wang, wo, weng.

y and w are not used as initial constants, but the simple or compound vowels which can be combined with y and w can be used as the syllables read as a whole, regarded as a phoneme. Pinyin of a word can be formed by combining the initial consonant and the simple or compound vowel, which is also a simple or compound vowel or a syllable read as a whole. Each syllable read as a whole has four tones, so there are totally 84 syllables read as a whole.

The initial consonant alone cannot represent a word. Therefore, during phoneme coding, the initial consonant only can be coded as an initial consonant, the simple or compound vowel only can be coded as a simple or compound vowel, and the syllable read as a whole only can be coded as a syllable read as a whole.

According to the arrangement and combination, the initial consonants have 21²¹coding forms, the simple or compound vowels have 96⁹⁶ coding forms, and the syllables read as a whole have 84⁸⁴ coding forms. Finally, (21²¹+96⁹⁶+84⁸⁴) coding tables may be formed, so that it is very difficult to crack the coding tables. That is, the first phoneme conversion rule is one of (21²¹+96⁹⁶+84⁸⁴) phoneme conversion rules. Therefore, in the embodiments of the present invention, the phoneme sequence is subjected to encryption coding by the phoneme coding rule, so that the safety of message transmission can be improved.

For example, in an optional embodiment, the target conversation message input by a user is that "my password is hidden here" is subjected to voice recognition to obtain the first phoneme sequence "w o3 d el m i4 m a3 y ing3 c ang2 z ai4 zh e4 1 il". After the first phoneme sequence is converted by the first phoneme conversion rule, the second phoneme sequence is "w o3 sh uol j inl t ianl d el t ianl q il zh enl h ao3".

Step 104: sending the second phoneme sequence to a first receiving terminal of the first conference group.

In the embodiments of the present invention, the first receiving terminal may be all participating parties in the first conference group other than the first sending terminal. That is, in this embodiment, the target conversation message input by a user may be sent to all the participating parties after being subjected to phoneme coding.

It should be understood that one teleconference includes a participating party located in a main venue, and other participating parties located outside the main venue. The first sending party may be a participating party in the main venue in the teleconference corresponding to the first conference group, may also be a participating party in the main venue in the teleconferences corresponding to other conference groups, or may also be a participating party not in the main venue in any one teleconference.

According to the embodiments of the present invention, the target conversation message input by a user is received; the target conversation message is converted into the first phoneme sequence; the first phoneme sequence is subjected to phoneme coding according to the first phoneme conversion rule corresponding to the first conference group to obtain the second phoneme sequence; and the second phoneme sequence is sent to the first receiving terminal of the first conversation group, so that the conversation message can be sent. Since the conversation message of the teleconference is transmitted through the phoneme sequence, so that limitation to the voice transmission form is avoided, and a user can attend a plurality of teleconferences at the same time. Meanwhile, the transmitted phoneme sequence is subjected to encryption coding by the phoneme conversion rule, so that the transmission safety of the conversation message is improved.

It should be understood that the first phoneme conversion rule may be agreed in advance and each participating party directly selects the first phoneme conversion rule locally, or a specific participating party (such as a participating party in the main venue or other participating parties) randomly selects one phoneme conversion rule and then sends the phoneme conversion rule to other participating parties. When a new participating party is added, the new participating party may request a phoneme conversion rule to the specific participating party. After the authorization of the specific participating party is obtained, the specific participating party sends the phoneme conversion rule to the new participating party.

It should be noted that when the target conversation message is a text message, it may be understood that the first sending terminal is inconvenient to send voice in the first conference group. For example, the first sending terminal performs voice communication in other conference groups (for example, located in the main venue of the teleconference corresponding to other conference groups), or the current environment of the first sending terminal is not suitable for sending voice (communicating with others, and the conference content is inconvenient for others to learn). At this time, the first sending terminal sends the conversation message to other participating parties in the first conference group through a phoneme.

When the target conversation message is a voice message, it may be understood that the first sending terminal is convenient to send voice in the first conference group. At this time, the first sending terminal may send the conversation message to participating parties in convenient to answer voice in the first conference group through a phoneme, or may also send the conversation message to the participating parties convenient to answer voice in the first conference group through a phoneme or audio frequency. For example, in a case that the target conversation message is the voice message, after the step 101, the method further includes:
sending the target conversation message to a second receiving terminal of the first conference group through an audio frequency.

In this embodiment, the first receiving terminal is a participating party inconvenient to answer in participating parties specified by a user to send (or all participating parties); and the second receiving terminal is a participating party convenient to answer in participating parties specified by a user to send (or all participating parties). In this embodiment, the target conversation message is sent by the participating party convenient to answer directly through an audio frequency, so that the sending effectiveness of the conversation message can be improved. The participating party specified to send may be a participating party of the main venue or other participating parties.

It should be understood that the first sending terminal may be used to send the conversation message, and may also be used to receive the conversation message. When the conversation message is received, the conversation message may be received through an audio frequency or through a phoneme.

For example, in an optional embodiment, the method further includes:
receiving first audio data sent by the second sending terminal, wherein the second sending terminal is a device corresponding to a user in the second conference group, and the second conference group and the first conference group are the same conference group or different conference groups; and
playing the first audio data.

It should be noted that, usually, the first sending terminal only can send or receive audio data in one conference group according to an audio frequency at the same time, and the first sending terminal may switch to different conference groups for voice communication at different times; therefore, the first conference group and the second conference group may the same conference group or different conference groups. In a case that the first sending terminal cannot switch to different conference groups for voice communication and the first sending terminal sends the target conference message to the second receiving terminal of the first conference group through an audio frequency, the first conference group and the second conference group are the same conference group at this time.

It should be understood that first audio data may be played according to default voice or the voice of a sending user (for example, voiceprint information may be sent together, and synthesis may be performed according to the voiceprint of the sending user). In one embodiment, the voiceprint information of each participating party may also be saved, and a user identity is added when the conversation message is sent, so that the receiving party directly determines the voiceprint information used in phoneme synthesis according to the user identity, and the transmission of the voiceprint information can be reduced. Specifically, the voiceprint may be recognized in the voice recognition process, so that the user identity can be determined.

In another optional embodiment, the method further includes:
receiving a third phoneme sequence sent by a third sending terminal, wherein the third sending terminal is a device corresponding to a user in a third conference group, and the third conference group and the first conference group are the same conference group or different conference groups;
performing phoneme decoding on the third phoneme sequence according to a second phoneme conversion rule corresponding to the third conference group to obtain a fourth phoneme sequence; and
displaying a text content corresponding to the fourth phoneme sequence, or playing second audio data synthesized by the fourth phoneme sequence.

In the embodiments of the present invention, in a case that the first sending terminal is a participating party inconvenient to answer, the text content corresponding to the fourth phoneme sequence can be displayed. In a case that the first sending terminal is a participating party convenient to answer, second audio data synthesized by the fourth phoneme sequence can be played. Specifically, the mode of synthesizing the fourth phoneme sequence into the second audio data may be referenced to related art, which is not further limited herein.

It should be noted that, usually, the first sending terminal only can send or receive audio data in one conference group according to an audio frequency at the same time, and the first sending terminal may switch to different conference groups for voice communication at different times; therefore, the first conference group and the third conference group may the same conference group or different conference groups. In a case that the first sending terminal cannot switch to different conference groups for voice communication and the first sending terminal sends the target conference message to the second receiving terminal of the first conference group through an audio frequency, the first conference group and the third conference group are the same conference group at this time.

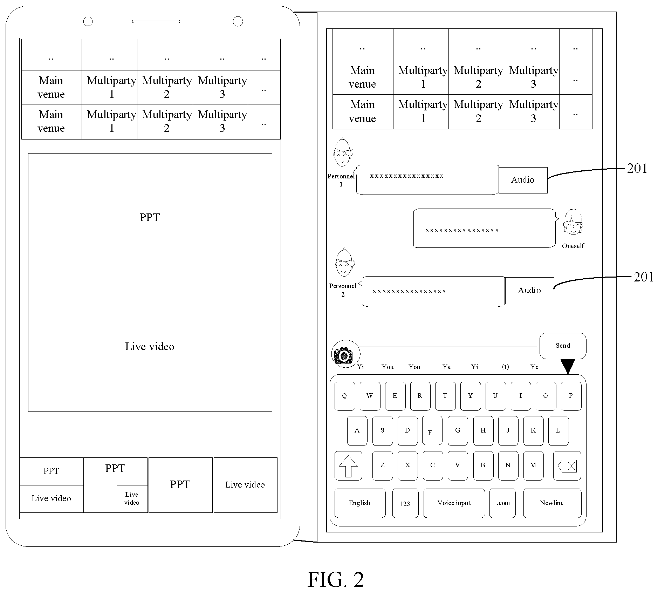

Further, as shown in FIG. 2, user information of a sending user corresponding to the fourth phoneme sequence may also be displayed when the text content corresponding to the fourth phoneme sequence may be displayed. Meanwhile, an operating control 201 may also be displayed. When a user clicks the operating control 201, the text content corresponding to the fourth phoneme sequence may be played in the form of voice.

Optionally, the display form of the teleconference may be set according to actual requirements. For example, in one embodiment, the electronic device of the folding screen and the display mode of the teleconference are described below in detail. Optionally before receiving the target conversation message input by a user, the method further includes:
displaying a first target content in a first display area of the first sending terminal, and displaying a second target content in a second display area,
wherein the first target content includes at least one of an electronic presentation document, video information and a conference chat window; and the second target content includes at least one of an electronic presentation document, video information and a conference chat window.

In this embodiment, the display of the conference chat window in the same conference group may be set according to actual requirements. For example, the conference chat window in the conference group may be display through a social chat group. In this embodiment, the conversation message displayed in the conference chat window specifically refers to a conversation message transmitted through a phoneme.

The electronic presentation document may be multimedia documents which can be displayed, such as PPT (PowerPoint), word and the like. As shown in FIG. 2 to FIG. 5, an interactive interface of the teleconference is described below in detail with reference to specific examples.

It should be noted that whether it is convenient for each participating party to transmit the conversation message through an audio frequency may be manually selected by each participating party, or may also be automatically detected by an electronic device of the participating party, which is not further limited herein. When a state whether it is convenience for each participating party to transmit the conversation message through the audio frequency is determined, the state may be sent to each participating party, or the state whether it is convenient for each participating party to transmit the conversation message through the audio frequency may be sent to a specified participating party (such as a participating party of the main venue), and then the main participating party sends the state to each participating party.

As shown in FIG. 2, a single-venue video window may be displayed in a first display area, and a single-venue conference chat window may be displayed in a second display area. The display form of the video window may be set in the single-venue video window, PPT of the single venue may only be displayed, the live video of the single venue may only be displayed, and the PPT and live video of the single venue may be displayed at the same time. The conference participating parties are displayed above the single-venue video window and above the single-venue conference chat window. In this embodiment, the conference participating parties are displayed in the form of a list. In this list, each row represents all participating parties of one teleconference. A user may perform operation on the corresponding list to switch the content displayed by the single-venue video window or the single-venue conference chat window. At the same time, the user may select the participating party sent by one conversation message based on the list above the single-venue conference chat window. Optionally, the state whether it is convenient for each participating party to transmit the conversation message through an audio frequency may be marked and displayed in the list. In this embodiment, the single-venue video window and the single-venue conference chat window may belong to the same teleconference, or may also belong to different teleconferences, which is not further limited herein.

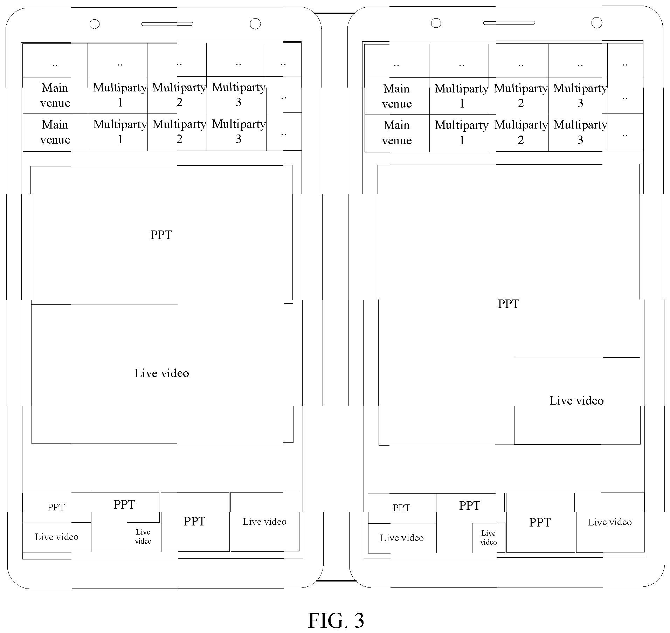

As shown in FIG. 3, a single-venue video window may be displayed in the first display area, and a single-venue video window may be displayed in the second display area. Optionally, the display form of the video window may be set in the single-venue video window, PPT of the single venue may only be displayed, the live video of the single venue may only be displayed, or the PPT and live video of the single venue may be displayed at the same time. Secondly, the display forms of the single-venue video window in the first display area and the single-venue video window in the second display area may be the same or different.

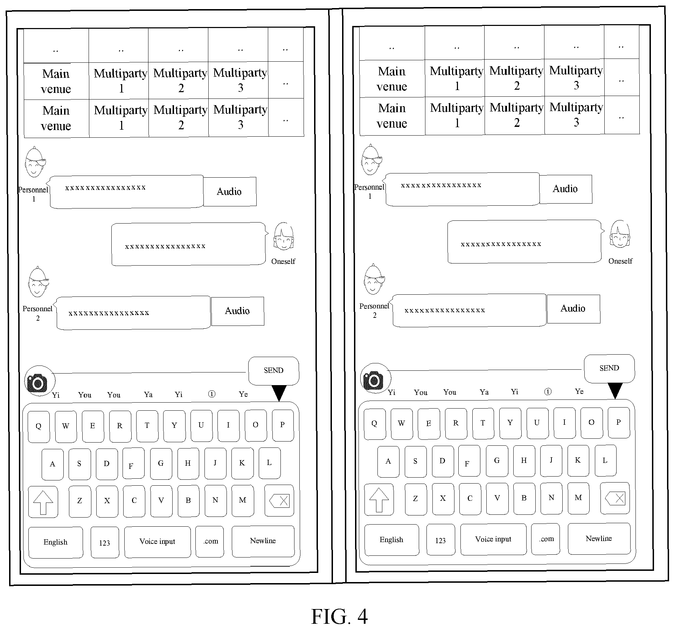

As shown in FIG. 4, the single-venue conference chat window may be displayed in the first display area, and the single-venue conference chat window may be displayed in the second display area.

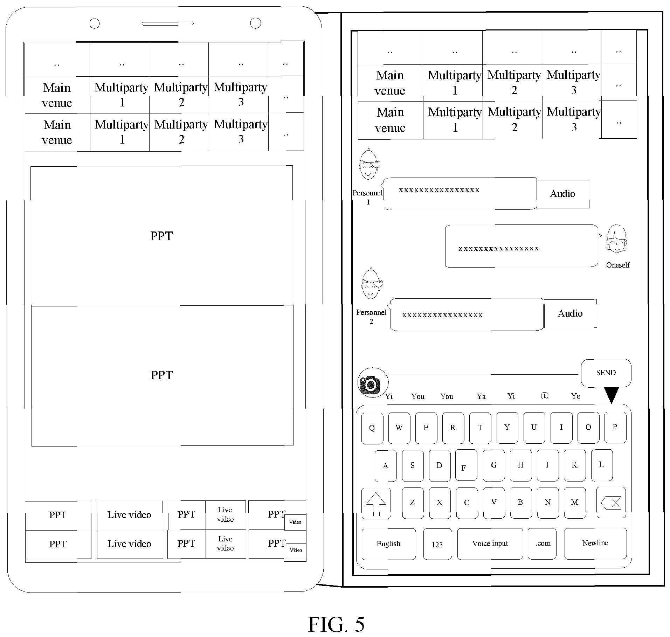

As shown in FIG. 5, a double-venue video window may be displayed in the first display area, and a single-venue conference chat window may be displayed in the second display area. Optionally, the display form of the video window may be set in the double-venue video window, PPT of the double venue may only be displayed, the live video of the double venue may only be displayed, or the PPT and live video of the double venue may be displayed at the same time.

It should be noted that in the same conference group, the phoneme conversion rules adopted by devices corresponding to each user in the group are the same. Specifically, the mode of determining the phoneme conversion rule in a certain group by each device may be set according to actual requirements.

For example, in an optional embodiment, before receiving the target conversation message input by a user, the method further includes:
determining the first phoneme conversion rule; and
sending the first phoneme conversion rule to a first device, wherein the first device is a device corresponding to users in the first conference group other than a first target user, and the first target user is a user corresponding to the first sending terminal.

In the embodiments of the present invention, the first sending terminal serves as a deciding party or a sending party of a first phoneme conversion rule, and the first phoneme conversion rule may be sent by the first sending terminal to other users in a first conference group. The first sending terminal may be a device corresponding to a certain participating party in a main venue corresponding to the first conference group. In other words, in the embodiments of the present invention, the phoneme conversion rule may be determined by participating parties in the main venue and then is forwarded to other participating parties. Specifically, the first sending party may randomly generate a group of phoneme conversion rules to serve as a first phoneme conversion rule. Certainly, in other embodiments, the first phoneme conversion rule may be generated by a certain participating party outside the main venue and then is sent to each participating party. The first phoneme conversion rule may also be generated by a certain participating party outside the main venue, and the first phoneme conversion rule is sent to a main venue participating party and then is sent to other participating parties by the main venue participating party.

It should be understood that in this embodiment, the first sending terminal may send the first phoneme conversion rule and may be sent to some or all users in the first conference group. For example, the first device may further be a device selected by the first sending terminal or a device corresponding to a user who meets a preset condition. The preset condition may be a user whose user level is higher than a preset level. Therefore, the sending pertinence of the first phoneme conversion rule and the safety of the conference are improved.

In another optional embodiment, before receiving the target conversation message input by a user, the method further includes:
receiving a phoneme conversion rule sent by a first device, wherein the first device is a device corresponding to users in the first conference group other than a first target user, and the first target user is a user corresponding to the first sending terminal; and
determining the phoneme conversion rule sent by the first device as the first phoneme conversion rule.

In the embodiments of the present invention, the difference from the above embodiment lies in that the first sending terminal serves as a receiving party of the first phoneme conversion rule, the first sending terminal may be a certain participating party in the main venue corresponding to the first conference group, or a participating party outside the main venue, which will not be further limited herein.

Further, the first sending terminal may request the first terminal to send the first phoneme conversion rule, or the first sending terminal may passively receive the first phoneme conversion rule sent by the first device. Optionally, the first sending terminal may be a device corresponding to a user who meets a preset condition. The preset condition may be a user whose user level is higher than a preset level. Therefore, the sending pertinence of the first phoneme conversion rule and the safety of the conference are improved.

It should be noted that the plurality of optional implementations described in this embodiment of the present invention may be implemented in combination with each other or may be implemented separately. This is not limited in this embodiment of the present invention.

Further, the electronic device may be connected to augmented reality (Augmented Reality, AR) glasses. The live PPT and the PPT of the teleconference may be watched by the AR glasses at the same time, and the text converted from the audio of a speaker of the teleconference may be seen.

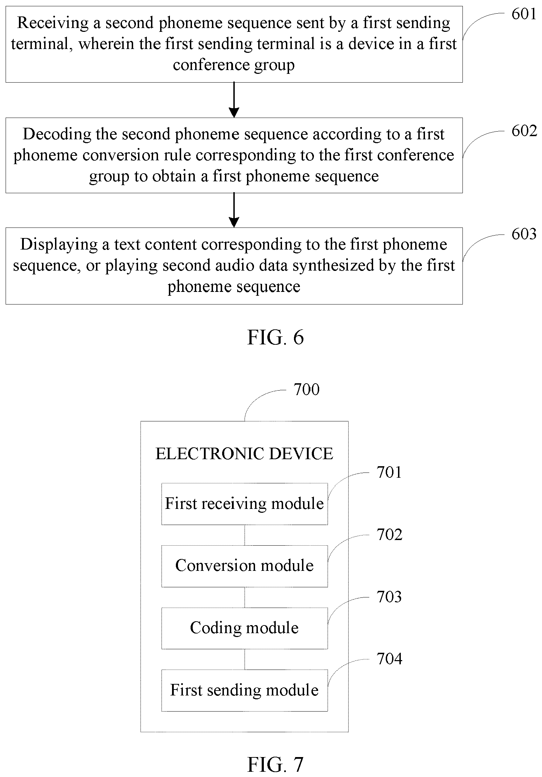

Referring to FIG. 6, the embodiments of the present invention further provide another interaction method. As shown in FIG. 6, the method includes:
Step 601: receiving a second phoneme sequence sent by a first sending terminal, wherein the first sending terminal is a device in a first conference group;
Step 602: decoding the second phoneme sequence according to a first phoneme conversion rule corresponding to the first conference group to obtain a first phoneme sequence; and
Step 603: displaying a text content corresponding to the first phoneme sequence, or playing second audio data synthesized by the first phoneme sequence.

Optionally, the method further includes:
receiving first audio data sent by the second sending terminal, wherein the second sending terminal is a device corresponding to a user in the second conference group, and the second conference group and the first conference group are the same conference group or different conference groups; and
playing the first audio data.

Optionally, the method further includes:
receiving a third phoneme sequence sent by a third sending terminal, wherein the third sending terminal is a device corresponding to a user in a third conference group, and the third conference group and the first conference group are the same conference group or different conference groups;
performing phoneme decoding on the third phoneme sequence according to a second phoneme conversion rule corresponding to the third conference group to obtain a fourth phoneme sequence; and
displaying a text content corresponding to the fourth phoneme sequence, or playing second audio data synthesized by the fourth phoneme sequence.

Optionally, before receiving the second phoneme sequence sent by the first sending terminal, the method further includes:
determining the first phoneme conversion rule; and
sending the first phoneme conversion rule to a second device, wherein the second device is a device corresponding to users in the first conference group other than a second target user, and the second target user is a user corresponding to the first receiving terminal.

Optionally, before receiving the second phoneme sequence sent by the first sending terminal, the method further includes:
receiving a phoneme conversion rule sent by a second device, wherein the second device is a device corresponding to users in the first conference group other than a second target user, and the second target user is a user corresponding to the first receiving terminal; and
determining the phoneme conversion rule sent by the second device as the first phoneme conversion rule.

It should be noted that the interaction method provided by the embodiments of the present invention is applied to a first receiving terminal of the teleconference, the first receiving terminal is a receiving terminal corresponding to the first sending terminal provided by the above embodiment, and the specific implementation may be referenced to the description of the process of receiving the third phoneme sequence by the first sending terminal provided by the above embodiment, which will not be elaborated herein.

In the embodiments of the present invention, since the conversation message of the teleconference is transmitted through the phoneme sequence, so that limitation to the voice transmission form is avoided, and a user can attend a plurality of teleconferences at the same time. Meanwhile, the transmitted phoneme sequence is subjected to encryption coding by the phoneme conversion rule, so that the transmission safety of the conversation message is improved.

Referring to FIG. 7, FIG. 7 is a structural diagram of an electronic device according to an embodiment of the present invention. The electronic device is applied to a first sending terminal of a teleconference. As shown in FIG. 7, the electronic device 700 includes:
a first receiving module 701, configured to receive a target conversation message input by a user;
a conversion module 702, configured to convert the target conversation message into a first phoneme sequence;
a coding module 703, configured to perform phoneme coding on the first phoneme sequence according to a first phoneme conversion rule corresponding to a first conference group to obtain a second phoneme sequence; and
a first sending module 704, configured to send the second phoneme sequence to a first receiving terminal of the first conference group,
wherein the target conversion message is a voice message or a text message.

Optionally, in a case that the target conversation message is the voice message, the electronic device further includes:
a second sending module, configured to send the target conversation message to a second receiving terminal of the first conference group through an audio frequency.

Optionally, the electronic device 700 further includes:
a second receiving module, configured to receive first audio data sent by the second sending terminal, wherein the second sending terminal is a device corresponding to a user in the second conference group, and the second conference group and the first conference group are the same conference group or different conference groups; and
a first play module, configured to play the first audio data.

Optionally, the electronic device 700 further includes:
a third receiving module, configured to receive a third phoneme sequence sent by a third sending terminal, wherein the third sending terminal is a device corresponding to a user in a third conference group, and the third conference group and the first conference group are the same conference group or different conference groups;
a first decoding module, configured to perform phoneme decoding on the third phoneme sequence according to a second phoneme conversion rule corresponding to the third conference group to obtain a fourth phoneme sequence; and
a first control module, configured to display a text content corresponding to the fourth phoneme sequence, or play second audio data synthesized by the fourth phoneme sequence.

Optionally, the electronic device 700 further includes:
a display module, configured to display a first target content in a first display area of the first sending terminal, and display a second target content in a second display area,
wherein the first target content includes at least one of an electronic presentation document, video information and a conference chat window; and the second target content includes at least one of an electronic presentation document, video information and a conference chat window.

Optionally, the electronic device 700 further includes:
a first determination module, configured to determine the first phoneme conversion rule; and
a third sending module, configured to send the first phoneme conversion rule to a first device, wherein the first device is a device corresponding to users in the first conference group other than a first target user, and the first target user is a user corresponding to the first sending terminal.

Optionally, the electronic device 700 further includes:
a fourth receiving module, configured to receive a phoneme conversion rule sent by a first device, wherein the first device is a device corresponding to users in the first conference group other than a first target user, and the first target user is a user corresponding to the first sending terminal; and
a fourth sending module, configured to determine the phoneme conversion rule sent by the first device as the first phoneme conversion rule.

The electronic device provided in this embodiment of the present invention can implement the processes implemented by the electronic device in the method embodiment in FIG. 1 to FIG. 5. To avoid repetition, details are not described herein again.

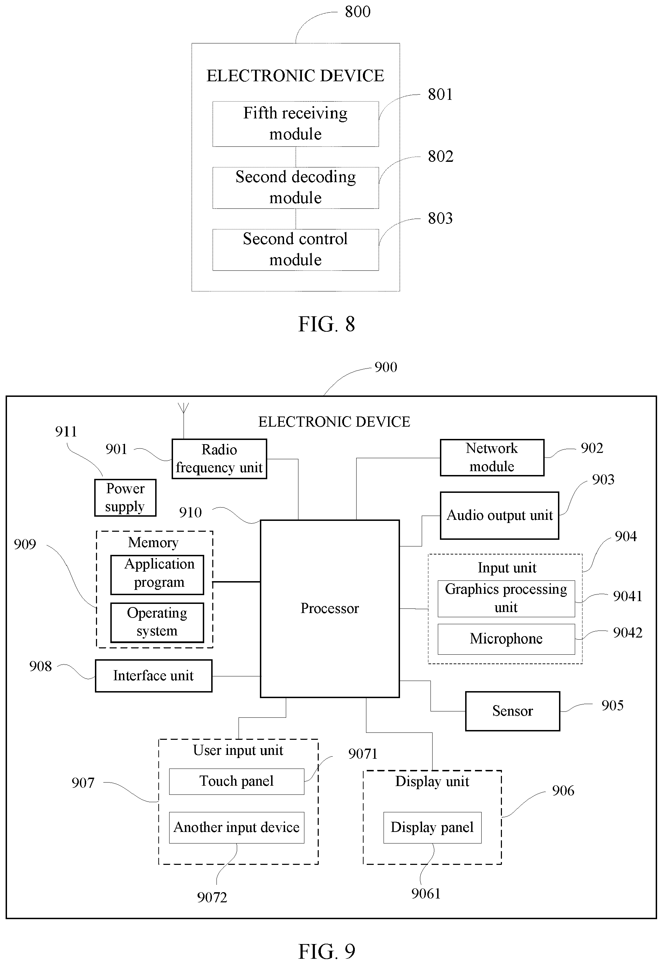

Referring to FIG. 8, FIG. 8 is a structural diagram of an electronic device according to an embodiment of the present invention. The electronic device is applied to a first receiving terminal of a teleconference. As shown in FIG. 8, the electronic device 800 includes:
a fifth receiving module 801, configured to receive a second phoneme sequence sent by a first sending terminal, wherein the first sending terminal is a device in a first conference group;
a second decoding module 802, configured to decode the second phoneme sequence according to a first phoneme conversion rule corresponding to the first conference group to obtain a first phoneme sequence; and
a second control module 803, configured to display a text content corresponding to the first phoneme sequence, or play second audio data synthesized by the first phoneme sequence.

Optionally, the electronic device 800 further includes:
a sixth receiving module, configured to receive first audio data sent by the second sending terminal, wherein the second sending terminal is a device corresponding to a user in the second conference group, and the second conference group and the first conference group are the same conference group or different conference groups; and
a second play module, configured to play the first audio data. Optionally, the electronic device 800 further includes:
   a seventh receiving module, configured to receive a third phoneme sequence sent by a third sending terminal, wherein the third sending terminal is a device corresponding to a user in a third conference group, and the third conference group and the first conference group are the same conference group or different conference groups;
   a third decoding module, configured to perform phoneme decoding on the third phoneme sequence according to a second phoneme conversion rule corresponding to the third conference group to obtain a fourth phoneme sequence; and
   a third control module, configured to display a text content corresponding to the fourth phoneme sequence, or play second audio data synthesized by the fourth phoneme sequence.

Optionally, the electronic device 800 further includes:
a second determination module, configured to determine the first phoneme conversion rule; and
a fifth sending module, configured to send the first phoneme conversion rule to a second device, wherein the second device is a device corresponding to users in the first conference group other than a second target user, and the second target user is a user corresponding to the first receiving terminal.

Optionally, the electronic device 800 further includes:
an eighth receiving module, configured to receive a phoneme conversion rule sent by a second device, wherein the second device is a device corresponding to users in the first conference group other than a second target user, and the second target user is a user corresponding to the first receiving terminal; and
a third determination module, configured to determine the phoneme conversion rule sent by the second device as the first phoneme conversion rule.

The electronic device provided by the embodiments of the present invention can implement the processes implemented by the electronic device in the method embodiment in FIG. 6. To avoid repetition, details are not described herein again.

FIG. 9 is a schematic diagram of a hardware structure of an electronic device according to embodiments of the present invention.

The electronic device 900 includes but is not limited to components such as a radio frequency unit 901, a network module 902, an audio output unit 903, an input unit 904, a sensor 905, a display unit 906, a user input unit 907, an interface unit 908, a memory 909, a processor 910, and a power supply 911. A person skilled in the art may understand that the structure of the electronic device shown in FIG. 9 constitutes no limitation on the electronic device. The electronic device may include more or fewer components than those shown in the figure, or a combination of some components, or an arrangement of different components. In this embodiment of the present invention, the electronic device includes but is not limited to a mobile phone, a tablet computer, a notebook computer, a palmtop computer, an in-vehicle terminal, a wearable device, a pedometer, and the like.

A radio frequency unit 901 is configured to receive a target conversation message input by a user;
a processor 910 is configured to convert the target conversation message into a first phoneme sequence, and perform phoneme coding on the first phoneme sequence according to a first phoneme conversion rule corresponding to a first conference group to obtain a second phoneme sequence; and
the radio frequency unit 901 is further configured to send the second phoneme sequence to a first receiving terminal of the first conference group.

Or a radio frequency unit 901 is configured to receive a second phoneme sequence sent by a first sending terminal, wherein the first sending terminal is a device in a first conference group; and
a processor 910 is configured to decode the second phoneme sequence according to a first phoneme conversion rule corresponding to the first conference group to obtain a first phoneme sequence, and display a text content corresponding to the first phoneme sequence or play second audio data synthesized by the first phoneme sequence.

It should be noted that the electronic device provided by the embodiments of the present invention can implement the processes implemented by the electronic device in the method embodiment in FIG. 1 and FIG. 6. To avoid repetition, details are not described herein again. In the embodiments of the present invention, since the conversation message of the teleconference is transmitted through the phoneme sequence, so that limitation to the voice transmission form is avoided, and a user can attend a plurality of teleconferences at the same time. Meanwhile, the transmitted phoneme sequence is subjected to encryption coding by the phoneme conversion rule, so that the transmission safety of the conversation message is improved.

It should be understood that in this embodiment of the present invention, the radio frequency unit 901 may be configured to receive and transmit information, or receive and transmit signals during a call. Specifically, the radio frequency unit receives downlink data from a base station, and transmits the downlink data to the processor 910 for processing; and transmits uplink data to the base station. Generally, the radio frequency unit 901 includes, but is not limited to, an antenna, at least one amplifier, a transceiver, a coupler, a low noise amplifier, and a duplexer. In addition, the radio frequency unit 901 may also communicate with a network and other devices through a wireless communication system.

The electronic device provides users with wireless broadband Internet access through the network module 902, for example, helps users receive and send e-mails, browse web pages, and access streaming media.

The audio output unit 903 may convert audio data received by the radio frequency unit 901 or the network module 902 or stored in the memory 909 into an audio signal and output the audio signal as a sound. Moreover, the audio output unit 903 can further provide audio output related to a specific function performed the electronic device 900 (for example, call signal receiving sound and message receiving sound). The audio output unit 903 includes a speaker, a buzzer, a telephone receiver, and the like.

The input unit 904 is configured to receive audio or radio frequency signals. The input unit 904 may include a graphics processing unit (Graphics Processing Unit, GPU) 9041 and a microphone 9042. The graphics processing unit 9041 is used to process image data of a static picture or a video obtained by an image capturing device (for example, a camera) in a video capturing mode or an image capturing mode. A processed image frame may be displayed on the display unit 906. The image frame processed by the graphics processing unit 9041 may be stored in the memory 909 (or another storage medium) or sent by using the radio frequency unit 901 or the network module 902. The microphone 9042 may receive sound and can process such sound into audio data. The audio data obtained through processing may be converted, in a telephone call mode, into a format that may be sent to a mobile communication base station via the radio frequency unit 901 for output.

The electronic device 900 further includes at least one sensor 905, for example, a light sensor, a motion sensor, and another sensor. Specifically, the light sensor includes an ambient light sensor and a proximity sensor. The ambient light sensor may adjust brightness of a display panel 9061 according to ambient light brightness. The proximity sensor may switch off the display panel 9061 and/or backlight when the electronic device 900 moves close to an ear. As a motion sensor, an accelerometer sensor may detect magnitude of acceleration in various directions (usually three axes), may detect magnitude and the direction of gravity when stationary, may be configured to identify electronic device postures (such as switching between a landscape mode and a portrait mode, related games, and magnetometer posture calibration), may perform functions related to vibration identification (such as a pedometer and a knock), and the like. The sensor 905 may further include a fingerprint sensor, a pressure sensor, an iris sensor, a molecular sensor, a gyroscope, a barometer, a hygrometer, a thermometer, an infrared sensor, or the like. Details are not described herein again.

The display unit 906 is configured to display information entered by the user or information provided for the user. The display unit 906 may include the display panel 9061, and the display panel 9061 may be configured in a form of a liquid crystal display (Liquid Crystal Display, LCD), an organic light-emitting diode (Organic Light-Emitting Diode, OLED), or the like.

The user input unit 907 may be configured to receive entered number or character information, and generate key signal input related to user settings and function control of the electronic device. Specifically, the user input unit 907 includes a touch panel 9071 and another input device 9072. The touch panel 9071, also called a touch screen, may collect touch operation on or near the touch panel by users (for example, operation on the touch panel 9071 or near the touch panel 9071 by fingers or any suitable objects or accessories such as a touch pen by the users). The touch panel 9071 may include two parts: a touch detection apparatus and a touch controller. The touch detection apparatus detects a touch position of the user, detects a signal brought by the touch operation, and transmits the signal to the touch controller. The touch controller receives touch information from the touch detection apparatus, converts the touch information into contact coordinates, sends the contact coordinates to the processor 910, and can receive and execute a command sent by the processor 910. In addition, the touch panel 9071 may be implemented by various types such as a resistive type, a capacitive type, an infrared ray type or a surface acoustic wave type. In addition to the touch panel 9071, the user input unit 907 may further include other input devices 9072. Specifically, the other input devices 9072 may include but are not limited to: a physical keyboard, a function key (such as a volume control key, a switch key), a trackball, a mouse, and a joystick, which is no longer repeated here.

Further, the touch panel 9071 can cover the display panel 9061. When detecting a touch operation on or near the touch panel, the touch panel 9071 transmits the touch operation to the processor 910 to determine a type of a touch event. Then the processor 910 provides corresponding visual output on the display panel 9061 based on the type of the touch event. Although in FIG. 9, the touch panel 9071 and the display panel 9061 are configured as two independent components to implement input and output functions of the electronic device, in some embodiments, the touch panel 9071 and the display panel 9061 can be integrated to implement the input and output functions of the electronic device. Details are not limited herein.

The interface unit 908 is an interface for connecting an external apparatus and the electronic device 900. For example, the external apparatus may include a wired or wireless headset port, an external power supply (or battery charger) port, a wired or wireless data port, a storage card port, a port configured to connect to an apparatus having an identification module, an audio input/output (I/O) port, a video I/O port, a headset port, and the like. The interface unit 908 can be configured to receive input from an external apparatus (for example, data information and power) and transmit the received input to one or more elements in the electronic device 900, or can be configured to transmit data between the electronic device 900 and the external apparatus.

The memory 909 may be configured to store a software program and various data. The memory 909 may mainly include a program storage area and a data storage area. The program storage area may store an operating system, an application required by at least one function (for example, a sound play function or an image display function), and the like. The data storage area may store data (for example, audio data or an address book) or the like created based on use of the mobile phone. In addition, the memory 909 may include a high-speed random access memory or a nonvolatile memory, for example, at least one disk storage device, a flash memory, or other volatile solid-state storage devices.

The processor 910 is a control center of the electronic device and connects all parts of the electronic device using various interfaces and circuits. By running or executing software programs and/or modules stored in the memory 909 and by calling data stored in the memory 909, the processor 910 implements various functions of the electronic device and processes data, thus performing overall monitoring on the electronic device. The processor 910 may include one or more processing units. Optionally, the processor 910 may integrate an application processor and a modem processor. The application processor mainly deals with an operating system, a user interface, an application, and the like. The modem processor mainly deals with wireless communication. It may be understood that the modem processor may not be integrated into the processor 910.

The electronic device 900 may further include a power supply 911 (such as a battery) supplying power to each component. Preferably, the power supply 911 may be logically connected to the processor 910 by using a power management system, so as to implement functions such as charging management, discharging management and power consumption management by using the power management system.

In addition, the electronic device 900 includes some functional modules not shown. Details are not described herein again.

Preferably, the embodiments of the present invention further provide an electronic device, including a processor 910, a memory 909, and a computer program that stored in the memory 909 and capable of running on the processor 910. When the computer program is executed by the processor 910, the foregoing processes of the interaction method embodiment are implemented, and a same technical effect can be achieved. To avoid repetition, details are not described herein again.

The embodiments of the present interaction further provide a computer readable storage medium. The computer readable storage medium stores a computer program. When the computer program is executed by a processor, the processes of the interaction method embodiment are implemented; and a same technical effect can be achieved. To avoid repetition, details are not described herein again. The computer-readable storage medium is, for example, a read-only memory (ROM), a random access memory (RAM), a magnetic disk, or an optical disc.

A person of ordinary skill in the art may realize that units and algorithm steps of various examples described with reference to the embodiments disclosed in this specification can be implemented by using electronic hardware, or a combination of computer software and electronic hardware. Whether these functions are performed by using hardware or software depends on a specific application and design constraints of the technical solutions. A person skilled in the art may use different methods to achieve the described functions for each particular application, but such implementation should not be considered as exceeding the scope of the present invention.

A person of ordinary skill in the art may clearly understand that, for convenient and simple description, for the specific working processes of the system, apparatus, and unit described above, reference may be made to a corresponding process in the foregoing method embodiments, and details are not described herein again.

In the embodiments provided in this application, it should be understood that the disclosed apparatus and method may be implemented in other manners. For example, the apparatus embodiment described above is only an example. For example, division into the units is only logical function division. There may be other division manners in actual implementation, for example, a plurality of units or components may be combined or integrated into another system, or some features may be ignored or not implemented. In addition, the displayed or discussed mutual couplings or direct couplings or communication connections may be implemented by using some interfaces. The indirect couplings or communication connections between the devices or units may be implemented in electronic, mechanical, or other forms.

The units described as separate parts may or may not be physically separate, and parts displayed as units may or may not be physical units, that is, may be located in one location, or may be distributed on a plurality of network units. Some or all of the units may be selected according to actual needs to achieve the objectives of the solutions of the examples.

In addition, functional units in each embodiment of the present invention may be integrated into one processing unit, or each of the units may exist alone physically, or two or more units may be integrated in one unit.

If the functions are implemented with a form of software function units and sold or used as independent products, the functions may be stored in a computer-readable storage medium. Based on this understanding, the technical solution, or the part contributing to the prior art or the part of the technical solution may be essentially embodied in the form of software products. The computer software products are stored in one storage medium and includes several instructions for enabling one computer device (which may be a personal computer, a sever or a network device) to perform all or some of the steps of the method according to the embodiments of the present invention. The storage medium includes various media that can store a program code such as a USB flash disk, a mobile hard disk, a ROM, a RAM, a magnetic disk, an optical disc, or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An interaction method, applied to a first sending terminal of a teleconference, wherein the method comprises:
receiving a target conversation message input by a user;
converting the target conversation message into a first phoneme sequence;
performing phoneme coding on the first phoneme sequence according to a first phoneme conversion rule corresponding to a first conference group to obtain a second phoneme sequence; and
sending the second phoneme sequence to a first receiving terminal of the first conference group,
wherein the target conversion message is a voice message or a text message.

2. The method according to claim 1, wherein in a case that the target conversion message is the voice message, after receiving the target conversation message input by a user, the method further comprises:
sending the target conversation message to a second receiving terminal of the first conference group through an audio frequency.

3. The method according to claim 1, further comprising:
receiving first audio data sent by the second sending terminal, wherein the second sending terminal is a device corresponding to a user in the second conference group, and the second conference group and the first conference group are the same conference group or different conference groups; and
playing the first audio data.

4. The method according to any one of claims 1 to 3, further comprising:
receiving a third phoneme sequence sent by a third sending terminal, wherein the third sending terminal is a device corresponding to a user in a third conference group, and the third conference group and the first conference group are the same conference group or different conference groups;
performing phoneme decoding on the third phoneme sequence according to a second phoneme conversion rule corresponding to the third conference group to obtain a fourth phoneme sequence; and
displaying a text content corresponding to the fourth phoneme sequence, or playing second audio data synthesized by the fourth phoneme sequence.

5. The method according to claim 1, wherein before receiving the target conversation message input by a user, the method further comprises:
displaying a first target content in a first display area of the first sending terminal, and displaying a second target content in a second display area,
wherein the first target content comprises at least one of an electronic presentation document, video information and a conference chat window; and the second target content comprises at least one of an electronic presentation document, video information and a conference chat window.

6. The method according to claim 1, wherein before receiving the target conversation message input by a user, the method further comprises:
determining the first phoneme conversion rule; and
sending the first phoneme conversion rule to a first device, wherein the first device is a device corresponding to users in the first conference group other than a first target user, and the first target user is a user corresponding to the first sending terminal.

7. The method according to claim 1, wherein before receiving the target conversation message input by a user, the method further comprises:
receiving a phoneme conversion rule sent by a first device, wherein the first device is a device corresponding to users in the first conference group other than a first target user, and the first target user is a user corresponding to the first sending terminal; and
determining the phoneme conversion rule sent by the first device as the first phoneme conversion rule.

8. An interaction method, applied to a first receiving terminal of a teleconference, wherein the method comprises:
receiving a second phoneme sequence sent by a first sending terminal, wherein the first sending terminal is a device in a first conference group;
decoding the second phoneme sequence according to a first phoneme conversion rule corresponding to the first conference group to obtain a first phoneme sequence; and
displaying a text content corresponding to the first phoneme sequence, or playing second audio data synthesized by the first phoneme sequence.

9. The interaction method according to claim 8, further comprising:
receiving first audio data sent by the second sending terminal, wherein the second sending terminal is a device corresponding to a user in the second conference group, and the second conference group and the first conference group are the same conference group or different conference groups; and
playing the first audio data.

10. The interaction method according to claim 8 or 9, further comprising:
receiving a third phoneme sequence sent by a third sending terminal, wherein the third sending terminal is a device corresponding to a user in a third conference group, and the third conference group and the first conference group are the same conference group or different conference groups;
performing phoneme decoding on the third phoneme sequence according to a second phoneme conversion rule corresponding to the third conference group to obtain a fourth phoneme sequence; and
displaying a text content corresponding to the fourth phoneme sequence, or playing second audio data synthesized by the fourth phoneme sequence.

11. The method according to claim 8, wherein before receiving the second phoneme sequence sent by the first sending terminal, the method further comprises:
determining the first phoneme conversion rule; and
sending the first phoneme conversion rule to a second device, wherein the second device is a device corresponding to users in the first conference group other than a second target user, and the second target user is a user corresponding to the first receiving terminal.

12. The method according to claim 8, wherein before receiving the second phoneme sequence sent by the first sending terminal, the method further comprises:
receiving a phoneme conversion rule sent by a second device, wherein the second device is a device corresponding to users in the first conference group other than a second target user, and the second target user is a user corresponding to the first receiving terminal; and
determining the phoneme conversion rule sent by the second device as the first phoneme conversion rule.

13. An electronic device, applied to a first sending terminal of a teleconference, wherein the electronic device comprises: a first receiving module, configured to receive a target conversation message input by a user;
a conversion module, configured to convert the target conversation message into a first phoneme sequence;
a coding module, configured to perform phoneme coding on the first phoneme sequence according to a first phoneme conversion rule corresponding to a first conference group to obtain a second phoneme sequence; and
a first sending module, configured to send the second phoneme sequence to a first receiving terminal of the first conference group,
wherein the target conversion message is a voice message or a text message.

14. An electronic device, applied to a first receiving terminal of a teleconference, wherein the electronic device comprises:
a fifth receiving module, configured to receive a second phoneme sequence sent by a first sending terminal, wherein the first sending terminal is a device in a first conference group;
a second decoding module, configured to decode the second phoneme sequence according to a first phoneme conversion rule corresponding to the first conference group to obtain a first phoneme sequence; and
a second control module, configured to display a text content corresponding to the first phoneme sequence, or play second audio data synthesized by the first phoneme sequence.

15. An electronic device, comprising a processor, a memory, and a computer program stored in the memory and capable of running on the processor, wherein when the computer program is executed by the processor, the steps of the interaction method according to any one of claims 1 to 12 are implemented.

16. A computer readable storage medium, storing a computer program, wherein when the computer program is executed by a processor, the steps of the interaction method according to any one of claims 1 to 12 are implemented.
